# EUROPÄISCHE PATENTSCHRIFT

(11) **EP 0 693 563 B1**
(45) Veröffentlichungstag und Bekanntmachung des Hinweises auf die Patenterteilung: **29.11.2000**
(21) Anmeldenummer: 95111171.5
(22) Anmeldetag: 15.07.1995
(51) Int. Cl.: C22B 7/04, C22B 26/22

(54) **Verfahren zur Aufarbeitung von aus der Magnesiumherstellung anfallenden Schlacken oder Krätzen**
Process for upgrading slags or skimmings from magnesium processing
Procédé de valorisation de scories ou de crasses provenant de la fabrication de magnésium

(30) Priorität: 19.07.1994 DE 4425424
(43) Veröffentlichungstag der Anmeldung: 24.01.1996
(73) Patentinhaber: Rheinkalk HDW GmbH, 37412 Herzberg-Scharzfeld (DE); Kali-Umwelttechnik Sondershausen GmbH, 99701 Sondershausen (DE)
(72) Erfinder: Rohmann, Matthias, D-37441 Bad Sachsa (DE); Scherzberg, Heinz, Dr., D-99706 Sondershausen (DE)

(56) Entgegenhaltungen:
- EP-A- 0 167 789
- WO-A-93/06254
- US-A- 2 486 433

## Beschreibung

Die Erfindung betrifft ein Verfahren zur Aufarbeitung von aus der Magnesiumherstellung anfallenden Schlacken oder Krätzen für die Wiederverwendung der darin enthaltenen Inhaltsstoffe, insbesondere Magnesiumchlorid, Alkalichlorid und Magnesiummetall.

Magnesiumsalzschlacken und -krätzen fallen bei der Magnesiummetallherstellung bei primären oder sekundären Umschmelz- und Raffinationsprozessen an, in denen metallisches Magnesium erschmolzen wird. In diesen Prozessen wird ein Salzgemisch bestehend aus Alkali- und Erdalkalichloriden und -fluoriden für die Erleichterung des Schmelzprozesses bzw. zur Schmelzabdeckung verwendet, aus dem sich als Abprodukt ein kompliziertes Gemisch von Erdalkali- und Alkalisalzen, -oxiden und metallischen Einschlüssen ergibt. Außer metallischem Magnesium können insbesondere bei Sekundärschmelzen noch Aluminium als Metall und als Oxid sowie Metallnitride, -carbide, -sulfide und -arsenide in kleinen Mengen in den resultierenden Abprodukten auftreten. Diese Stoffgemische reagieren bereits bei gewöhnlicher Temperatur mit Wasser unter Bildung von Wasserstoff aus Nichtmetallhydriden und sind demzufolge nur unter besonders aufwendigen Vorkehrungen wie z. B. Feuchtigkeitsausschluß in einer Sondermülldeponie, z. B. einer Untertagedeponie, gefahrlos deponiefähig.

Diese Schlacken und Krätzen sind dem Grunde nach ähnlich zusammengesetzt wie die bei Aluminiumumschmelzprozessen anfallenden Aluminiumsalzschlacken, sie sind jedoch stofflich noch komplizierter aufgebaut. Der Salzgehalt der Schlacken und Krätzen resultiert aus dem Schmelzprozeß zugesetzten Schmelzsalzen.

Magnesiumschmelzsalze haben eine Schmelztemperatur von 370 bis 450 °C je nach Zusammensetzung und bestehen aus eutektischen Gemischen von MgCl₂, KCl, NaCl und CaF₂ als weiterem Zusatz. Schmelzsalze ohne oder mit geringem CaF₂-Anteil und niedrigem Schmelzpunkt werden vorwiegend als Abdecksalze für eine Magnesiumschmelze, hingegen werden höher schmelzende, CaF₂-reiche als Raffinationssalze für Magnesiumschmelzen eingesetzt.

Der Stoffbestand der Schmelzsalze geht in die Krätzen und Schlacken ein und bildet mit den Metallresten und den Metalloxiden und anderen Reaktionsprodukten ein stark in seiner Zusammensetzung schwankendes Stoffgemisch aus Metallen und löslichen und unlöslichen Metallverbindungen, wobei bei einigen Schmelzprozessen noch Aluminium als Komponente eingeschleppt wird.

Aufgrund dieser stofflichen Vielfalt und leichteren Zersetzbarkeit des Metalles lassen sich auch die für Aluminiumsalzschlacken bewährten Regenerationsprozesse zur Wiedergewinnung des Salzanteils und des Großteiles des metallischen Aluminiums nicht auf Magnesiumsalzschlacken und -krätzen übertragen.

Aus US-A-2,486,433 ist ein Verfahren bekannt, bei dem verbrauchte Salzschmelzen aus Elektrolysezellen der Magnesium-Schmelzelektrolyse aufgearbeitet werden. Die Überführung in Chloride wird bei einem pH-Wert bis zu pH 8 vorgenommen. Störende Anteile an Aluminium, die abgetrennt werden müßten, sind nicht enthalten.

Der Erfindung liegt die Aufgabe zugrunde, die nutzbaren Inhaltsstoffe aus Magnesiumsalzschlacken und -krätzen in eine wiederverwendbare Form zu überführen und störende Bestandteile abzutrennen.

Gemäß Patentanspruch 1 wird diese Aufgabe dadurch gelöst, daß die in den Schlacken oder Krätzen enthaltenen Oxide, Alkalisalze und das Magnesiummetall in lösliche Chloride überführt werden und die Auflösung in Salzsäure in zwei Lösestufen, welche einen unterschiedlichen pH-Wert haben, erfolgt. Damit wird die stoffliche Vielfalt, die einer Wiederverwertung der Inhaltsstoffe bisher entgegenstand, beseitigt.

Gemäß Patentanspruch 2 besteht eine andere Ausgestaltung der Erdindung darin, daß zuerst die Schlacke oder Krätze mit Salzsäure umgesetzt wird, bis ein pH-Wert < 2 in der Lösung erreicht ist und daß dann weitere Schlacke oder Krätze zugegeben wird und bei einem pH-Wert > 3,5 die Lösung abfiltriert wird. Dadurch läßt sich eine konzentrierte und darüberhinaus weitestgehend aluminiumfreie Magnesiumchloridlösung in wiederverwertfähiger Form aus den stark in ihrer Zusammensetzung schwankenden Schlacken und Krätzen gewinnen. Dabei kann überraschend durch Wahl der erfindungsgemäßen Reaktionsbedingungen das Aluminium als Hydroxid separiert werden, ohne daß außer der Schlacke selbst weitere Fällungsmittel notwendig sind. In Salzsäure lösen sich die Halogenide, Oxide und Metallanteile glatt auf und bilden eine Lösung, deren Hauptbestandteil Magnesiumchlorid ist. Neben MgCl₂ und AlCl₃ sind noch die aus den Schmelz-/Abdecksalzen stammenden Alkalichloride KCl und NaCl enthalten.

Die Hauptkomponente MgCl₂ erhält man entweder durch Auflösung des Anteiles an wasserfreiem Magnesiumchlorid oder durch Auflösung des Magnesiumoxidanteiles oder durch Auflösung des Metallanteiles.

Durch die Reaktion des Metallinhaltes der Schlacken und Krätzen entsteht Wasserstoff, der ebenfalls nutzbar ist und nur etwas CH₄ (aus Carbiden) sowie geringe Mengen Phosphine und Arsine (aus Phosphiden und Arseniden) und Spuren von H₂S (aus Sulfiden) enthält.

Durch das erfindungsgemäße Verfahren resultiert eine geringe Menge an säureunlöslichem Rückstand und einer konzentrierten Salzlösung, die leicht voneinander getrennt werden können.

Die vom Rückstand abgetrennte Magnesiumchloridlösung ist völlig klar und hat eine Dichte oberhalb 1,20 g/cm³. Einer Wiederverwendung steht jedoch der Aluminiumanteil dieser Lösung entgegen, der z. B. beim Umschmelzen von aluminiumhaltigen Magnesiumlegierungen in die Schlacke/Krätze gelangt.

Eine typische Lösungszusammensetzung einer solchen Lösung ist:

| | | | | |
|---|---|---|---|---|
| 70 - 90 | g/l | Mg | als | MgCl₂ |
| 6 - 12 | g/l | Al | als | AlCl₃ |
| 3 - 8 | g/l | Na | als | NaCl |
| 3 - 8 | g/l | K | als | KCl |
| 1 - 3 | g/l | Ca | als | CaCl₂ |
| 0,3 - 1,0 | g/l | NH₄ | als | NH₄Cl |
| pH-Wert | < | 2,0. | | |

Bis auf den Aluminium- und Ammoniumgehalt entspricht diese Lösung den Stoffen, die zur Schmelzsalzherstellung oder zur Metallgewinnung verwendet werden.

Es wurde nun überraschenderweise gefunden, daß bei der nachträglichen Reaktion dieser aluminiumhaltigen vom unlöslichen Rückstand abgetrennten Lösung mit frischer Krätze bzw. Salzschlacke praktisch das gesamte gelöste Aluminium als Aluminiumhydroxid in gut filtrierbarer Form und ohne Zusatz weiterer Fällchemikalien abgeschieden und so vom Magnesiumchlorid getrennt werden kann.

Auf diese Weise entsteht auf einfache und billige Weise eine Lösung, die außer geringen Resten von Aluminium- und Ammoniumchlorid nur Stoffe aufweist, welche mit dem Schmelzsalz eingebracht wurden und auch zur Magnesiummetall bzw. Schmelzsalzherstellung Verwendung finden.

Eine andere vorteilhafte Ausgestaltung der Erfindung ist dadurch gekennzeichnet, daß zunächst die zu zersetzenden Schlacke- bzw. Krätzestücke mit einem Unterschuß an wässriger Salzsäure und so viel Wasser, daß alle Salze gelöst werden, umgesetzt wird. Es stellt sich dabei eine Lösung mit einem pH-Wert > 3,5, vorzugsweise 3,5 bis 5,5 ein, in welcher vorhandenes Aluminium nicht löslich ist und als Aluminiumhydroxid ausfällt. Diese Aluminiumhydroxid enthaltende Salzlösung läßt sich leicht von den ungelösten Schlacke-/Krätzestücken abtrennen. Diese werden dann mit frischer Salzsäure vollständig bis zur Beendigung der Wasserstoffentwicklung und Erreichen eines pH-Wertes < 2, vorzugsweise 0 bis 1,5 umgesetzt. Dabei entsteht eine Lösung mit gelöstem Aluminiumchlorid in der der säureunlösliche Rückstand suspendiert ist. Gibt man diese Suspension in die erste Lösephase, so fällt auch hier unter der Einwirkung frischer Schlacke/Krätze das Aluminiumhydroxid aus.

Die Suspension mit dem pH-Wert > 5 läßt sich durch Filtration, vorzugsweise durch eine Filterpresse trennen. Es entsteht einerseits Aluminiumhydroxid in stark verunreinigter Form und andererseits eine konzentrierte, nur noch Reste von Aluminium enthaltene Lösung, deren Hauptbestandteil Magnesiumchlorid ist.

Eine typische Lösungszusammensetzung nach der Aluminiumausfällung ist:

| | | | | |
|---|---|---|---|---|
| 55 - 70 | g/l | Mg | als | MgCl₂ |
| < 1 | g/l | Al | als | AlCl₃ |
| 3 - 8 | g/l | Na | als | NaCl |
| 3 - 8 | g/l | K | als | KCl |
| 1 - 3 | g/l | Ca | als | CaCl₂ |
| 0,3 - 1 | g/l | NH₄ | als | NH₄Cl |
| pH > | 3,5. | | | |

Diese Lösung läßt sich nun auf verschiedene Weise wiederverwenden.

Eine mögliche Verwendung ist die Wiedergewinnung der für die Schmelzsalzherstellung notwendigen Grundstoffe MgCl₂ . 6H₂O, KCl und NaCl am Standort der Schmelzsalzherstellung. Dazu muß die Lösung zunächst bis auf ca. 33 % MgCl₂ eingedampft werden, wobei beim nachfolgenden Kühlen das in der Lösung enthaltene Kaliumchlorid als Carnallit neben NaCl auskristallisiert. Die gewonnenen Salze sind rein und direkt wiederverwendungsfähig. Aus der MgCl₂-Lösung kann durch weiteres Eindampfen bis auf eine MgCl₂-Konzentration über 40 % MgCl₂ reines MgCl₂ . 6H₂O gewonnen werden, das ebenfalls für die Schmelzsalzherstellung wiederverwendet werden kann.

Dabei ist zu beachten, daß im Unterschied zum Verfahren der Aluminium-Salzschlackeaufarbeitung das Salz aus dem Wiedergewinnungsprozeß in einer vom eingesetzten Schmelzsalz abweichenden Relation MgCl₂ : KCl : NaCl gewonnen wird. Während im Schmelzsalz auf 1 Teil MgCl₂ etwa 0,5 Teile KCl und etwa 0,6 Teile NaCl enthalten sind, fällt durch die Umwandlung von MgO und Mg-Metall in MgCl₂ relativ mehr Magnesiumchlorid an (MgCl₂ : KCl : NaCl > 1 : 0,1 : 0,1).

Das Ammonium reichert sich in der Eindampfungslösung an, so daß letztendlich eine Restcharge mit hohem NH₄-Gehalt verworfen werden muß.

Eine andere Möglichkeit ist die Nutzung der beim erfindungsgemäßen Wiedergewinnungsverfahren der Nutzungskomponenten der Krätzen und Salzschlacken anfallenden MgCl₂-Lösung zur Magnesiummetallerzeugung.

Führt man die Krätze-/Schlackeaufarbeitung am Standort der Magnesiummetallelektrolyse durch, so wird die aus der Regeneration stammende MgCl₂-Lösung der für die Mg-Metallerzeugung notwendigen MgCl₂-Lösung zugemischt. Das für die Magnesiummetallerzeugung erforderliche Magnesiumchlorid wird entweder durch Eindampfung von konzentrierter MgCl₂-Lösung und Entwässerung der dabei gewonnenen Hydrate im HCl-Strom oder durch Fällung des als MgCl₂-vorliegenden Magnesiumanteils einer Lösung, Gewinnung und Reinigung des Mg-Hydroxids und chlorierende Röstung des daraus gewonnenen Magnesiumoxids hergestellt. In beiden Verfahren ist es möglich und wirtschaftlich vorteilhaft, eine aus der erfindungsgemäßen Regeneration der Salzschlacken bzw. Krätzen gewonnene Magnesiumchloridlösung bei der Magnesiumchloridherstellung mitzuverwenden.

Das bei der Filtration der MgCl₂₋KCl-NaCl-Lösung anfallende unreine Aluminiumhydroxid läßt sich stofflich nicht verwerten, da alle säureunlöslichen Verunreinigungen mit in dieses Abprodukt gelangen. Es wurde jedoch gefunden, daß sich das gelartige bis krümelige Material auf einfache Weise unter Ausnutzung des MgCl₂₋Gehaltes der Haftlösung durch Sorelbindung mit einem MgO-Träger verfestigen läßt. Dazu genügt ein Zusatz von 0,10 bis 0,30 Masseteilen MgO je 1 Teil feuchtem Filterkuchen. Der MgO-Träger kann dabei entweder gebrannter Magnesit (> 80 % MgO) oder Halbbrannt-Dolomit (25 ... 30 % MgO, ca. 70 % CaCO₃) oder ein Gemisch beider Stoffe sein.

Die Erfindung wird durch Ausführungsbeispiele näher erläutert.

### Beispiel 1

Stückige Magnesiumkrätze (-salzschlacke) mit einer Stückgröße von max. 100 mm wird mit 18-prozentiger Abfallsalzsäure aus einem adiabatischen Absorptionsprozeß und soviel Wasser gelöst, daß sich keine Salze ausscheiden können, wobei Wasserstoff, welcher mit Spuren an PH₃ und AsH₃ verunreinigt ist, entweicht. Die Mischung erwärmt sich auf 90 °C bis 100 °C. Die Salzsäure wird in zwei Portionen zugesetzt. Zunächst wird etwa 75 bis 80 % der erforderlichen Säure in einer ersten Lösestufe zugegeben. Dadurch kommt die Reaktion zum Stehen und bei einem pH-Wert von 3,5 bis 5,0 wird die Reaktionssuspension von den restlichen nicht umgesetzten Krätzestücken abgezogen. Diese werden in einer zweiten Lösestufe mit den restlichen Salzsäureanteilen separat umgesetzt, wobei sich eine Lösung mit hohem Aluminiumgehalt und einem pH-Wert von 0 bis 2,0 bildet. Diese Reaktionslösung wird bei der folgenden Charge der 1. Lösungsstufe zugesetzt und dient zur Auflösung frischer Krätzestücke gemeinsam mit Salzsäure.

Die Reaktionssuspension aus der ersten Lösestufe aus gelösten Salzen, Aluminiumhydroxid und Unlöslichem wird in einer Filterpresse in ein klares Filtrat und einen feuchten Filterkuchen, der verworfen wird, getrennt. Durch fraktionierte Eindampfung werden die Alkalichloride und Magnesiumchlorid wiedergewonnen. Dabei fallen mit steigender Eindampftemperatur zunächst bevorzugt die Alkalichloride und anschließend Magnesiumchloridhydrate als Kristallisate an.

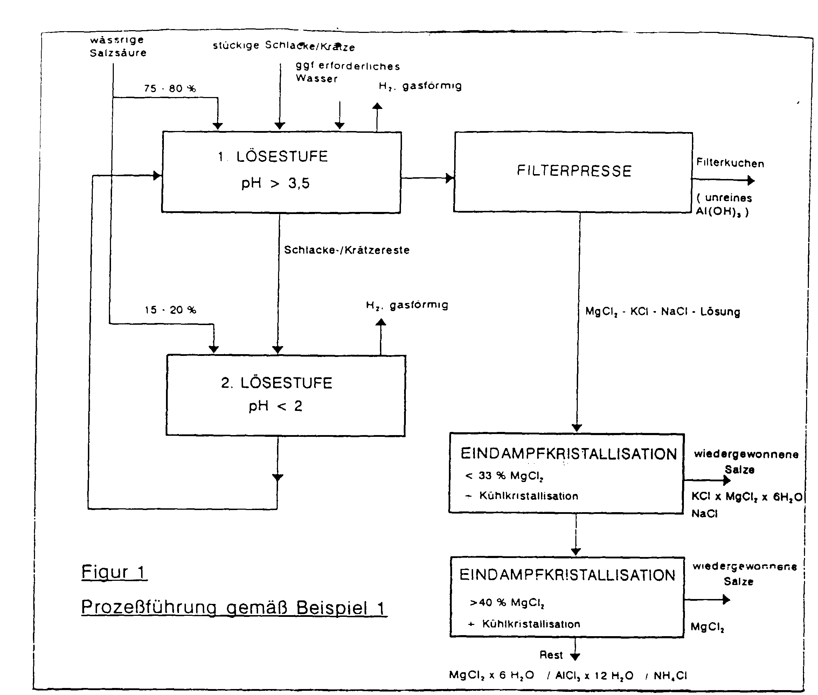

Die Kristallisate werden entweder gemeinsam oder einzeln beim Prozeß der Schmelzsalzherstellung als Grundstoffe anteilig mitverwendet, wodurch entsprechende Mengen KCl, NaCl und MgCl₂ . 6H₂O ersetzt werden. Die Prozeßführung ist schematisch in Fig. 1 dargestellt. Die umgesetzten Stoffmengen sind aus Tabelle 1 ersichtlich.

**Tabelle 1:**

| Übersicht über die entstandenen Reaktionsprodukte berechnet auf 1 kg Mg Krätze | | | | | | | |
|---|---|---|---|---|---|---|---|
| Mg - Krätze | Gas | HCl | Al(OH)₃ | Abdampfsalz (kg) | | | Σ Salz |
| [ kg ] | [ l ] | [ kg ] | [ kg ] | 125 °C | 130 °C | 128 °C | |
| 1 | 488 | 1,4 = 6,6 kg 18 %ige HCL | 1,16 | 0,53 | 0,67 | 0,84 | 2,04 |

Zusammensetzung der rückgewonnenen Salze je 1 kg eingesetzte Schlacke/Krätze
KCl = 110 g/kg Schlacke/Krätze
NaCl = 110 g/kg Schlacke/Krätze
MgCl₂ x 6H₂O = 1720 g/kg Schlacke/Krätze
Zusammensetzung der Krätze/Schlacke
Σ MgO + Al₂O₃ + Mg + Al = 55 %
NaCl = 12 %
Kcl = 12 %
MgCl₂ = 6 %

### Beispiel 2

In einer ersten Lösestufe werden die gesamte wässrige Salzsäure und etwa 70 - 85 % der Salzschlacke/-Krätze in stückiger Form sowie die Restschlacke aus der zweiten Lösestufe zur Reaktion gebracht und unter Wasserstoffbildung einschließlich des vorhandenen Aluminiums aufgelöst. Nach Beendigung der Wasserstoffentwicklung wird die heiße saure Salzlösung (pH < 2) frische Schlacke/Krätze im Überschuß eingebracht und in einer zweiten Lösestufe das Aluminium als Hydroxid ausgefällt und der pH-Wert auf 3,5 bis 5,5 angehoben.

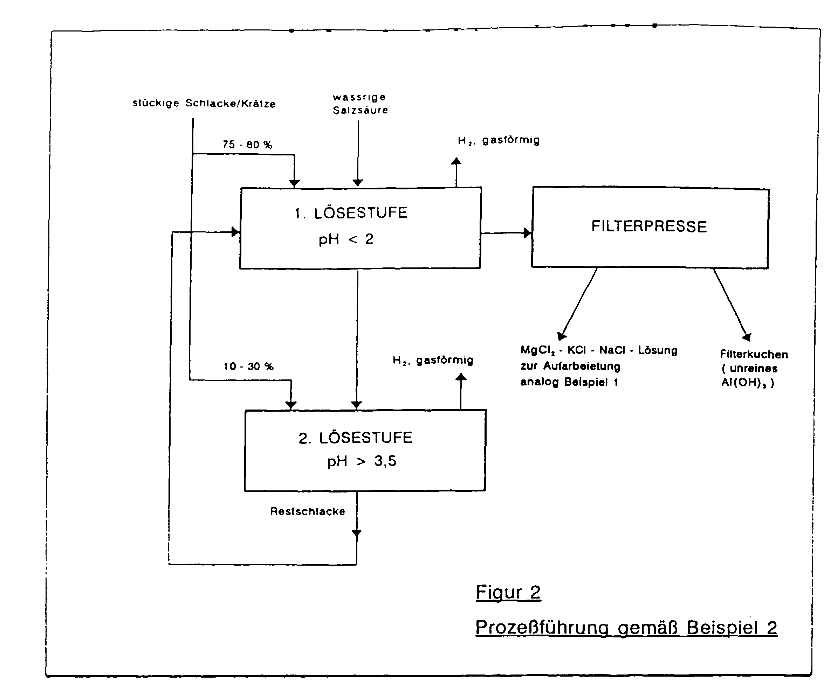

Die überschüssigen Schlacke/Krätzereste werden abgetrennt und in die erste Lösestufe überführt; die Aluminiumhydroxid enthaltende Suspension wird wie in Beispiel 1 weiterbehandelt. Die Prozeßführung ist schematisch in Fig. 2 dargestellt. Die umgesetzten Stoffmengen sind aus Tabelle 2 ersichtlich.

**Tabelle 2:**

| Übersicht über die entstandenen Reaktionsprodukte berechnet auf 1 kg Mg Krätze | | | | | | | |
|---|---|---|---|---|---|---|---|
| Mg - Krätze | Gas | HCl | Al(OH)₃ | Abdampfsalz (kg) | | | Σ Salz |
| [ kg ] | [ l ] | [ kg ] | [ kg ] | 125 °C | 130 °C | 128 °C | |
| 1 | 488 | 1,4 = 6,6 kg 18 %ige HCL | 1,16 | 0,53 | 0,67 | 0,84 | 2,04 |

Zusammensetzung der rückgewonnenen Salze je 1 kg eingesetzte Schlacke/Krätze
KCl = 110 g/kg Schlacke/Krätze
NaCl = 110 g/kg Schlacke/Krätze
MgCl₂ x 6H₂O = 1720 g/kg Schlacke/Krätze
Zusammensetzung der Krätze/Schlacke
Σ MgO + Al₂O₃ + Mg + Al = 55 %
NaCl = 12 %
Kcl = 12 %
MgCl₂ = 6 %

### Beispiel 3

Stückige Magnesiumschlacke/-Krätze werden gemäß Beispiel 1 oder 2 in eine MgCl₂-KCl-NaCl-Lösung überführt, die jedoch abweichend von der beschriebenen Vorgehensweise nicht eingedampft und zur Herstellung von Grundstoffen für eine Schmelzsalzherstellung verwendet werden wie in Beispiel 1 beschrieben, sondern als Grundstoff für die Magnesummetallelektrolyse mitverwendet werden. Dazu wird die nach der Abtrennung des Aluminiumhydroxids gewonnene Magnesiumchloridlösung anteilig bei der Herstellung des wasserfreien Magnesiumchlorids für die Elektrolyse mitverwendet.

Wird wasserfreies MgCl₂ aus Meerwasser-Magnesit durch chlorierende Röstung hergestellt, so kann die MgCl₂-Lösung einfach dem zur Magnesiumhydroxidfällung eingesetzten Meerwasser zugemischt werden, wodurch der Magnesiumgehalt der zu fällenden Lösung erhöht wird.

Wird wasserfreies MgCl₂ durch thermische Entwässerung von Magnesiumchloridhydraten hergestellt, so kann die aus der Salzschlacke-/Krätzeaufarbeitung stammende MgCl₂-Lösung anteilig bei der Herstellung der MgCl₂-Hydrate als Grundstoff mitverwendet werden.

### Beispiel 4

Der aus der Aufarbeitung der Schlacke und/oder Krätze aus den Beispielen 1 und 2 resultierende feuchte Filterkuchen wurde mit gebranntem Magnesit (ca. 85 ... 90 % MgO) bzw. Halbbrannt-Dolomit (ca. 25-27 % MgO, ca. 70 % CaCO₃) gemischt und innerhalb 48 Stunden eine vollständige Verfestigung bei folgenden Mischungsverhältnissen erreicht:

| feuchter Al(OH) ₃ -Filterkuchen (Massenanteile) | gebr. Magnesit (Massenanteile) | Halbbrannt-Dolomit (Massenanteile) |
|---|---|---|
| 1 | 0,12 | - |
| 1 | 0,10 | 0,10 |
| 1 | - | 0,5 |
| 1 | - | 1,0 |

## Patentansprüche

1. Verfahren zur Aufarbeitung von aus der Magnesiumherstellung anfallenden Schlacken oder Krätzen durch Überführung der in den Schlacken oder Krätzen enthaltenen Oxide, Alkalisalze und des Magnesiummetalls in lösliche Chloride, dadurch gekennzeichnet, daß die in den Schlacken oder Krätzen enthaltenen Oxide, Alkalisalze und das Magnesiummetall in die Chloride überführt und wiederverwendet werden und die anderen Metalle als Hydroxide abgetrennt werden wobei zuerst die in der Schlacke oder Krätze enthaltenen Salze mit verdünnter Salzsäure gelöst werden und die Reaktionssuspension einschließlich Aluminiumhydroxid und unlöslicher feiner Rückstände bei einem pH-Wert > 3,5 von den groben Resten nicht umgesetzter Krätzestücke abfiltriert wird und dann die Krätzereste mit Salzsäure umgesetzt werden und die Lösung bei einem pH-Wert < 2 abfiltriert wird.

2. Verfahren zur Aufarbeitung von aus der Magnesiumherstellung anfallenden Schlacken oder Krätzen durch Überführung der in den Schlacken oder Krätzen enthaltenen Oxide, Alkalisalze und des Magnesiummetalls in lösliche Chloride, dadurch gekennzeichnet, daß die in den Schlacken oder Krätzen enthaltenen Oxide, Alkalisalze und das Magnesiummetall in die Chloride überführt und wiederverwendet werden und die anderen Metalle als Hydroxide abgetrennt werden wobei zuerst die Schlacke oder Krätze mit Salzsäure umgesetzt wird, bis ein pH-Wert < 2 in der Lösung erreicht ist und dann weitere Schlacke oder Krätze zugegeben wird und bei einem pH-Wert > 3,5 Aluminiumhydroxid ausgefällt und zusammen mit den unlöslichen Rückständen von der Metallchloridlösung durch Filtration abgetrennt wird.

3. Verfahren nach Anspruch 1 oder 2, dadurch gekennzeichnet, daß die aus der Schlacke/Krätzeauflösung resultierende MgCl₂-KCl-NaCl-haltige Lösung stufenweise bis auf eine MgCl₂-Konzentrationen > 40 % eingedampft und die Alkalichloride und das Magnesiumchlorid in fester Form gewonnen werden.

4. Verfahren nach Anspruch 1 oder 2, dadurch gekennzeichnet, daß die alkalichloridhaltige Magnesiumchloridlösung im Prozeß der Herstellung des für die Magnesiummetallelektrolyse hergestellten Magnesiumoxids oder Magnesiumchloridhydrates als Grundstoff mitverwendet wird.

5. Verfahren nach einem der Ansprüche 1 bis 4, dadurch gekennzeichnet, daß das von der Lösung abfiltrierte Aluminiumhydroxid allein oder zusammen mit den unlöslichen Rückständen aus der Schlacke eines MgO-Trägers wie Magnesiumoxid oder Krätze durch Zusatz von gebranntem Magnesit, von Halbbrannt-Dolomit (MgO + CaCO₃) oder Mischungen daraus verfestigt wird, wobei das Mischungsverhältnis von feuchtem Aluminiumhydroxid-Filterkuchen zu MgO-Träger je nach dessen MgO-Gehalt so zu wählen ist, daß auf 1 Teil feuchten Filterkuchen 0,1 bis 0,3 Teile MgO zugemischt werden.

## Claims

1. A process for upgrading slags or dross arising from the production of magnesium by converting the oxides, alkali salts and magnesium metal contained in the slags or dross into soluble chlorides, characterised in that the oxides, alkali salts and magnesium metal contained in the slags or dross are converted into chlorides and are reused, and the other metals are separated as hydroxides, wherein the salts contained in the slag or dross are first dissolved with dilute hydrochloric acid and the reaction suspension, including aluminium hydroxide and insoluble fine residues, is filtered off at a pH > 3.5 from the coarse residues of unreacted pieces of dross and the dross residues are then reacted with hydrochloric acid and the solution is filtered off at a pH < 2.

2. A process for upgrading slags or dross arising from the production of magnesium by converting the oxides, alkali salts and magnesium metal contained in the slags or dross into soluble chlorides, characterised in that the oxides, alkali salts and magnesium metal contained in the slags or dross are converted into chlorides and are reused, and the other metals are separated as hydroxides, wherein the slag or dross is first reacted with hydrochloric acid until the pH of the solution is < 2, and further slag or dross is then added and aluminium hydroxide is precipitated at a pH > 3.5 and is separated from the metal chloride solution by filtration, together with the insoluble residues.

3. A process according to claims 1 or 2, characterised in that the solution which results from the digestion of the slag/dross and which contains MgCl₂-KCl-NaCI is evaporated in stages to a MgCl₂ concentration > 40 % and the alkali chlorides and magnesium chloride are recovered in solid form.

4. A process according to claims 1 or 2, characterised in, that the alkali chloride-containing magnesium chloride solution is used in conjunction as a basic material in the process for producing magnesium oxide or magnesium chloride hydrate which is manufactured for electrolysis for the production of magnesium metal.

5. A process according to any one of claims 1 to 4, characterised in that the aluminium hydroxide which is filtered off from the solution is consolidated on its own or together with the insoluble residues from the slag of an MgO carrier, such as magnesium oxide or dross, by the addition of calcined magnesite, of semi-calcined dolomite (MgO + CaCO₃) or of mixtures thereof, wherein the mixture ratio of moist aluminium hydroxide filter cake to MgO carrier is selected depending on the MgO content of the latter so that 0.1 to 0.3 parts MgO are admixed with 1 part of moist filter cake.

## Revendications

1. Procédé de traitement des scories et du mâchefer, issus de la production de magnésium, par transformation des oxydes, des sels de métal alcalin et du magnésium métallique contenus dans les scories ou dans le mâchefer, en chlorures solubles,
caractérisé en ce que
• les oxydes, les sels de métal alcalin et le magnésium métallique contenus dans les scories et le mâchefer sont convertis en des chlorures et sont réutilisés, et les autres métaux sont séparés sous forme d'hydroxyde,
• en premier lieu les sels contenus dans les scories et le mâchefer, sont dissous avec de l'acide chlorhydrique dilué, et
• la suspension réactionnelle, y compris l'hydroxyde d'aluminium et les fins résidus insolubles, est séparée par filtration à une valeur de pH > 3,5 des résidus grossiers de fragments de mâchefer qui n'ont pas réagi, et
• les résidus de mâchefer sont ensuite mis à réagir avec de l'acide chlorhydrique, et la solution est séparée par filtration à une valeur de pH < 2.

2. Procédé de traitement des scories et du mâchefer issus de la production du magnésium, par transformation des oxydes, des sels de métal alcalin et du magnésium métallique contenus dans les scories et le mâchefer, en chlorures solubles,
caractérisé en ce que
• les oxydes, les sels de métal alcalin et le magnésium métallique contenus dans les scories et le mâchefer sont convertis en chlorures et sont réutilisés, et les autres métaux sont séparés sous forme d'hydroxydes,
• en premier lieu les scories et le mâchefer sont mis à réagir avec de l'acide chlorhydrique, jusqu'à ce qu'une valeur de pH < 2 soit atteinte dans la solution, et
• ensuite d'autres scories ou du mâchefer sont ajoutés et à une valeur de pH > 3,5 on précipite l'hydroxyde d'aluminium et conjointement aux résidus insolubles on le sépare par filtration de la solution de chlorure métallique.

3. Procédé selon la revendication 1 ou la revendication 2,
caractérisé en ce que
la solution qui contient MgCl₂-KCl-NaCl résultant de la mise en solution des scories ou du mâchefer, est évaporée graduellement jusqu'à une concentration en MgCl₂ > 40 % et on produit les chlorures de métal alcalin et le chlorure de magnésium sous forme solide.

4. Procédé selon la revendication 1 ou la revendication 2,
caractérisé en ce que
la solution de chlorure de magnésium contenant des chlorures de métal alcalin, est utilisée conjointement comme substance de base dans le processus de production de l'oxyde de magnésium ou d'hydrate de chlorure de magnésium préparé pour l'électrolyse du magnésium métallique.

5. Procédé selon l'une quelconque des revendications 1 à 4,
caractérisé en ce que
• l'hydroxyde d'aluminium séparé par filtration de la solution, tout seul ou conjointement avec les résidus insolubles est rendu solide à partir des scories d'un support de MgO comme l'oxyde de magnésium ou du mâchefer, par addition de magnésite cuite, de dolomite mi-cuite (MgO + CaCO₃) ou de mélanges de ceux-ci,
• le rapport de mélange du gâteau de filtre d'hydroxyde d'aluminium humide au support de MgO étant à choisir selon sa teneur en MgO de façon telle que pour 1 partie de gâteau de filtre humide, on ajoute de 0,1 à 0,3 parties de MgO par mélange.
